# EUROPEAN PATENT APPLICATION

(11) **EP 4 503 696 A1**
(43) Date of publication of application: **05.02.2025**
(21) Application number: 22933505.4
(22) Date of filing: 25.03.2022
(51) Int. Cl.: H04W 16/28

(54) **TERMINAL, RADIO COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2022/014468
(87) International publication number: WO 2023/181366

(57) **Abstract**

A terminal according to one aspect of the present disclosure includes a receiving section that receives information related to a precoder type indicating a codebook subset and downlink control information including a field indicating precoding information and a number of layers, and a control section that determines a transmitted precoding matrix indicator and the number of layers to be applied to UL transmission, based on the information related to the precoder type and the field in the downlink control information. When more than four antenna ports are supported in the UL transmission, correspondence between codepoints of the field and the transmitted precoding matrix indicator and the number of layers is defined in common to a plurality of codebook subsets.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In Rel-15 NR, uplink (UL) Multi Input Multi Output (MIMO) transmission of up to four layers is supported. For future NR, in order to implement higher spectral efficiency, supporting UL transmission with the number of layers greater than four has been under study. For example, for Rel-18 NR, up to 6-rank transmission using six antenna ports, up to 6/8-rank transmission using eight antenna ports, and the like have been under study.

However, studies have not been carried out on how to control UL transmission (for example, how to determine a precoding matrix or the like) regarding UL transmission using more than four antenna ports. Unless this is clarified, increase of communication throughput may be prevented.

In view of this, the present disclosure has one object to provide a terminal, a radio communication method, and a base station that can appropriately control UL transmission using more than four antenna ports.

### Solution to Problem

A terminal according to one aspect of the present disclosure includes a receiving section that receives information related to a precoder type indicating a codebook subset and downlink control information including a field indicating precoding information and a number of layers, and a control section that determines a transmitted precoding matrix indicator and the number of layers to be applied to UL transmission, based on the information related to the precoder type and the field in the downlink control information. When more than four antenna ports are supported in the UL transmission, correspondence between codepoints of the field and the transmitted precoding matrix indicator and the number of layers is defined in common to a plurality of codebook subsets.

### Advantageous Effects of Invention

According to one aspect of the present disclosure, UL transmission using more than four antenna ports can be appropriately controlled.

### Brief Description of Drawings

[FIG. 1] FIG. 1 is a diagram to show an example of a table of a precoding matrix W for single-layer (rank 1) transmission using four antenna ports in a case in which a transform precoder is disabled in Rel-16 NR.
[FIG. 2] FIG. 2 is a diagram to show an example of a table of the precoding matrix W for 2-layer (rank 2) transmission using four antenna ports in a case in which the transform precoder is disabled in Rel-16 NR.
[FIG. 3] FIG. 3 is a diagram to show an example of a table of the precoding matrix W for 3-layer (rank 3) transmission using four antenna ports in a case in which the transform precoder is disabled in Rel-16 NR.
[FIG. 4] FIG. 4 is a diagram to show an example of a table of the precoding matrix W for 4-layer (rank 4) transmission using four antenna ports in a case in which the transform precoder is disabled in Rel-16 NR.
[FIG. 5] FIG. 5 is a diagram to show an example of correspondence between precoding information and number of layers field values and the number of layers and TPMIs in Rel-16 NR.
[FIG. 6] FIG. 6A and FIG. 6B are diagrams to show examples of antenna layouts of eight antenna ports.
[FIG. 7] FIG. 7 is a diagram to show an example of a table used for determination of the number of layers/TPMI indexes when more than four antenna ports are supported.
[FIG. 8] FIG. 8A and FIG. 8B are diagrams to show examples of field configurations included in DCI when more than four antenna ports are supported.
[FIG. 9] FIG. 9 is a diagram to show an example of a schematic structure of a radio communication system according to one embodiment.
[FIG. 10] FIG. 10 is a diagram to show an example of a structure of a base station according to one embodiment.
[FIG. 11] FIG. 11 is a diagram to show an example of a structure of a user terminal according to one embodiment.
[FIG. 12] FIG. 12 is a diagram to show an example of a hardware structure of the base station and the user terminal according to one embodiment.
[FIG. 13] FIG. 13 is a diagram to show an example of a vehicle according to one embodiment.

### Description of Embodiments

### (Control of Transmission of SRS and PUSCH)

In Rel-15 NR, a terminal (a user terminal, a User Equipment (UE)) may receive information (SRS configuration information, for example, a parameter in an RRC control element "SRS-Config") used for transmission of a reference signal for measurement (for example, a sounding reference signal (SRS)).

Specifically, the UE may receive at least one of information related to one or a plurality of SRS resource sets (SRS resource set information, for example, an RRC control element "SRS-ResourceSet") and information related to one or a plurality of SRS resources (SRS resource information, for example, an RRC control element "SRS-Resource").

One SRS resource set may be related to a certain number of SRS resources (the certain number of SRS resources may be grouped together). Each SRS resource may be identified with an SRS resource indicator (SRI) or an SRS resource ID (Identifier).

The SRS resource set information may include information of an SRS resource set ID (SRS-ResourceSetId), a list of SRS resource IDs (SRS-ResourceId) used in the resource set, an SRS resource type, and usage of the SRS.

Here, the SRS resource type may indicate any one of a periodic SRS (P-SRS), a semi-persistent SRS (SP-SRS), and an aperiodic CSI (Aperiodic SRS (A-SRS)). Note that the UE may periodically (or periodically after activation) transmit the P-SRS and the SP-SRS, and transmit the A-SRS, based on an SRS request of DCI.

The usage (an RRC parameter "usage", an L1 (Layer-1) parameter "SRS-SetUse") may be, for example, beam management (beamManagement), a codebook (CB), a non-codebook (noncodebook (NCB)), antenna switching, or the like. The SRS with the usage of the codebook or the non-codebook may be used for determination of a precoder of codebook-based or non-codebook-based uplink shared channel (Physical Uplink Shared Channel (PUSCH)) transmission based on the SRI.

For example, in a case of codebook-based transmission, the UE may determine the precoder (precoding matrix) for PUSCH transmission, based on the SRI, a transmitted rank indicator (TRI), and a transmitted precoding matrix indicator (TPMI). In a case of non-codebook-based transmission, the UE may determine the precoder for PUSCH transmission, based on the SRI.

The SRS resource information may include an SRS resource ID (SRS-ResourceId), the number of SRS ports, an SRS port number, transmission Comb, SRS resource mapping (for example, a time and/or frequency resource position, a resource offset, periodicity of resources, the number of repetitions, the number of SRS symbols, an SRS bandwidth, or the like), hopping related information, an SRS resource type, a sequence ID, spatial relation information of the SRS, or the like.

The spatial relation information (for example, an RRC information element "spatialRelationInfo") of the SRS may indicate spatial relation information between a certain reference signal and the SRS. The certain reference signal may be at least one of a synchronization signal/broadcast channel (Synchronization Signal/Physical Broadcast Channel (SS/PBCH)) block, a channel state information reference signal (CSI-RS), and an SRS (for example, another SRS). The SS/PBCH block may be referred to as a synchronization signal block (SSB).

The spatial relation information of the SRS may include at least one of an SSB index, a CSI-RS resource ID, and an SRS resource ID as an index of the certain reference signal.

Note that, in the present disclosure, an SSB index, an SSB resource ID, and an SSB Resource Indicator (SSBRI) may be interchangeably interpreted. A CSI-RS index, a CSI-RS resource ID, and a CSI-RS Resource Indicator (CRI) may be interchangeably interpreted. An SRS index, an SRS resource ID, and an SRI may be interchangeably interpreted.

The spatial relation information of the SRS may include a serving cell index, a BWP index (BWP ID), or the like corresponding to the certain reference signal.

Regarding a certain SRS resource, when the UE is configured with the spatial relation information related to the SSB or the CSI-RS and the SRS, the UE may transmit the SRS resource by using a spatial domain filter (spatial domain transmission filter) the same as a spatial domain filter (spatial domain reception filter) for reception of the SSB or the CSI-RS. In this case, the UE may assume that a UE receive beam of the SSB or the CSI-RS and a UE transmit beam of the SRS are the same.

Regarding a certain SRS (target SRS) resource, when the UE is configured with the spatial relation information related to another SRS (reference SRS) and the SRS (target SRS), the UE may transmit the target SRS resource by using a spatial domain filter (spatial domain transmission filter) the same as a spatial domain filter (spatial domain transmission filter) for transmission of the reference SRS. In other words, in this case, the UE may assume that a UE transmit beam of the reference SRS and a UE transmit beam of the target SRS are the same.

Based on a value of a certain field (for example, an SRS resource indicator (SRI) field) in DCI (for example, DCI format 0_1), the UE may determine spatial relation of the PUSCH scheduled by the DCI. Specifically, the UE may use, for PUSCH transmission, the spatial relation information (for example, the RRC information element "spatialRelationInfo") of the SRS resource determined based on a value (for example, the SRI) of the certain field.

In Rel-15/16 NR, when codebook-based transmission is used for the PUSCH, the UE may be configured with the SRS resource set having up to two SRS resources with its usage being the codebook by RRC, and one of the up to two SRS resources may be indicated by DCI (the SRI field of 1 bit). A transmit beam of the PUSCH is indicated by the SRI field.

The UE may determine the TPMI and the number of layers (transmission rank) for the PUSCH, based on a "precoding information and number of layers field" (hereinafter also referred to as a precoding information field). The UE may select the precoder from an uplink codebook regarding the same number of ports as the number of SRS ports indicated by a higher layer parameter "nrofSRS-Ports" configured for the SRS resources indicated by the SRI field, based on the TPMI, the number of layers, or the like.

In Rel-15/16 NR, when non-codebook-based transmission is used for the PUSCH, the UE may be configured with the SRS resource set having up to four SRS resources with its usage being the non-codebook by RRC, and one or more of the up to four SRS resources may be indicated by DCI (the SRI field of 2 bits).

The UE may determine the number of layers (transmission rank) for the PUSCH, based on the SRI field. For example, the UE may determine that the number of SRS resources indicated by the SRI field is the same as the number of layers for the PUSCH. The UE may calculate the precoder of the SRS resources.

When the CSI-RS (which may be referred to as an associated CSI-RS) related to the SRS resources (or the SRS resource set to which the SRS resources belong) is configured in a higher layer, the transmit beam of the PUSCH may be calculated based on (measurement of) the related CSI-RS being configured. Otherwise, the transmit beam of the PUSCH may be indicated by the SRI.

Note that the UE may be configured with whether to use codebook-based PUSCH transmission or use non-codebook-based PUSCH transmission by a higher layer parameter "txConfig" indicating a transmission scheme. The parameter may indicate a value of "codebook" or "non-codebook (nonCodebook)".

In the present disclosure, the codebook-based PUSCH (codebook-based PUSCH transmission, codebook-based transmission) may mean the PUSCH of a case in which the UE is configured with "codebook" as the transmission scheme. In the present disclosure, the non-codebook-based PUSCH (non-codebook-based PUSCH transmission, non-codebook-based transmission) may mean the PUSCH of a case in which the UE is configured with "non-codebook" as the transmission scheme.

### (Determination of PUSCH Precoder in Codebook (CB)-Based Transmission)

As described above, in a case of codebook (CB)-based transmission, the UE may determine the precoder for PUSCH transmission, based on the SRI, the TRI, the TPMI, or the like.

The SRI, the TRI, the TPMI, or the like may be notified to the UE, using downlink control information (DCI). The SRI may be indicated by an SRS Resource Indicator field (SRI field) in the DCI, or may be indicated by a parameter "srs-ResourceIndicator" included in an RRC information element "ConfiguredGrantConfig" of a configured grant PUSCH.

The TRI and the TPMI may be indicated by a "Precoding information and number of layers" field in the DCI. The precoding information and number of layers field is also referred to as a precoding information field for the sake of simplicity.

The UE may report UE capability information related to a precoder type, and be configured with a precoder type based on the UE capability information from the base station using higher layer signaling. The UE capability information may be information (which may be, for example, represented by an RRC parameter "pusch-TransCoherence") of a precoder type used by the UE in PUSCH transmission.

The UE may determine a precoder to be used in PUSCH transmission, based on information (for example, an RRC parameter "codebookSubset") of a precoder type included in PUSCH configuration information (for example, an information element "PUSCH-Config" of RRC signaling) notified using higher layer signaling. The UE may be configured with a subset of PMIs indicated by the TPMIs by codebookSubset.

Note that the precoder type may be indicated by one of or a combination of at least two of "full coherent" (fully coherent), "partial coherent", and "non coherent" (non-coherent) (which may be, for example, represented by parameters such as "fully and partial and non coherent (fullyAndPartialAndNonCoherent)" and "partial and non coherent (partialAndNonCoherent)") .

For example, the RRC parameter "pusch-TransCoherence" indicating a UE capability may indicate "full coherent (fullCoherent)", "partial coherent (partialCoherent)", or "non coherent (nonCoherent)". The RRC parameter "codebookSubset" may indicate "fully and partial and non coherent (fullyAndPartialAndNonCoherent)", "partial and non coherent (partialAndNonCoherent)", or "non coherent (nonCoherent)".

"Full coherent" may mean that synchronization is established between all of the antenna ports used for transmission (which may be expressed as "phases can be aligned", "phase control can be performed for each coherent antenna port", "a precoder can be appropriately applied to each coherent antenna port", or the like). "Partial coherent" may mean that synchronization is established between a part of ports of the antenna ports used for transmission but synchronization is not established between the part of ports and other ports. "Non coherent" may mean that no synchronization is established between any antenna port used for transmission.

Note that it may be assumed that the UE that supports the precoder type of "full coherent" supports the precoder type of "partial coherent" and "non coherent". It may be assumed that the UE that supports the precoder type of "partial coherent" supports the precoder type of "non coherent".

In the present disclosure, a precoder type, coherency, PUSCH transmission coherence, a coherent type, a coherence type, a codebook type, a codebook subset, a codebook subset type, and the like may be interchangeably interpreted.

The UE may determine a precoding matrix corresponding to a TPMI index obtained from the DCI (for example, DCI format 0_1; the same applies hereinafter) for scheduling UL transmission, out of a plurality of precoders (which may be referred to as precoding matrices, codebooks, or the like) for CB-based transmission.

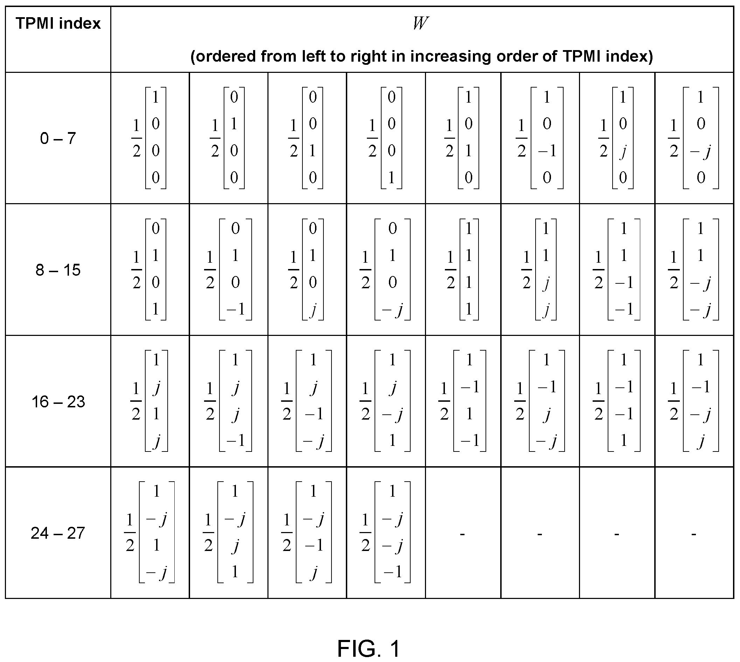

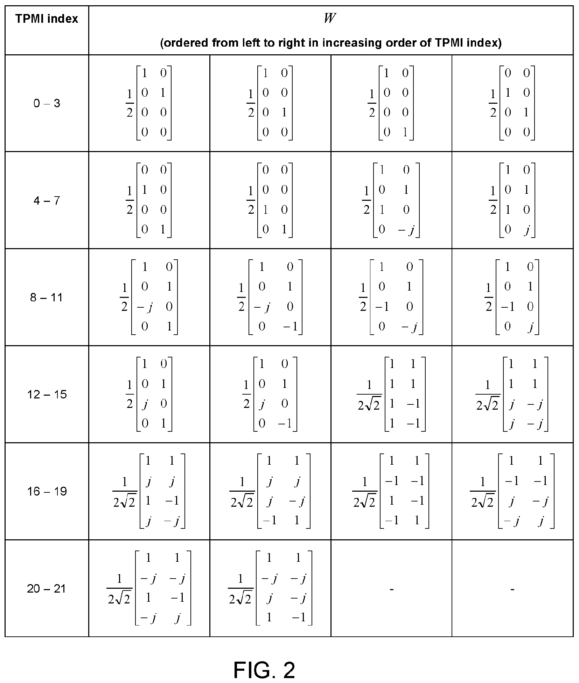

FIGS. 1 to 4 are diagrams to show examples of association between the codebook subsets and the TPMI indexes. FIG. 1 corresponds to a table of a precoding matrix W for single-layer (rank 1) transmission using four antenna ports in a case in which transform precoding (which may be referred to as a transform precoder) is disabled in Rel-16 NR. FIG. 1 shows corresponding W in ascending order of the TPMI indexes from left to right (the same applies to FIGS. 2 to 4).

A correspondence (which may be referred to as a table) indicating the TPMI indexes and corresponding W as shown in each of FIGS. 1 to 4 is also referred to as a codebook. A part of the codebook is also referred to as a codebook subset.

In FIG. 1, when the codebook subset (codebookSubset) is "fully and partial and non coherent (fullyAndPartialAndNonCoherent)", any TPMI from 0 to 27 is notified to the UE for single-layer transmission. When the codebook subset is "partial and non coherent (partialAndNonCoherent)", any TPMI from 0 to 11 is configured for the UE for single-layer transmission. When the codebook subset is "non coherent (nonCoherent)", any TPMI from 0 to 3 is configured for the UE for single-layer transmission.

FIGS. 2 to 4 each correspond to a table of the precoding matrix W for 2 to 4-layer (rank 2-4) transmission using four antenna ports in a case in which the transform precoding is disabled in Rel-16 NR.

With reference to FIG. 2, the TPMIs notified to the UE for 2-layer transmission are from 0 to 21 (the codebook subset is "fully and partial and non coherent"), from 0 to 13 (the precoder type is "partial and non coherent"), or from 0 to 5 (the precoder type is "non coherent").

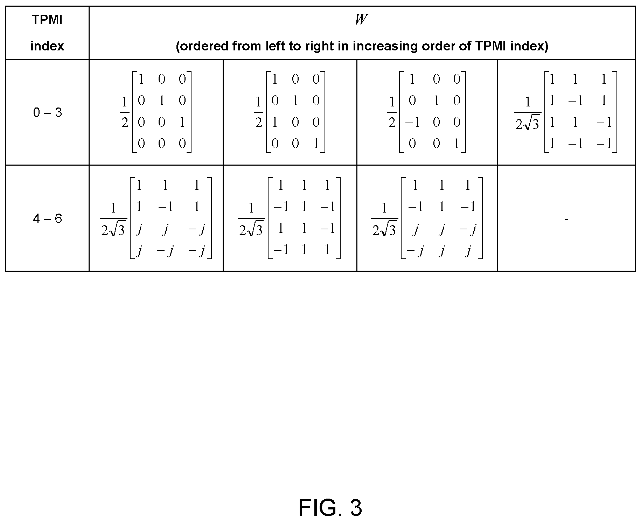

With reference to FIG. 3, the TPMIs notified to the UE for 3-layer transmission are from 0 to 6 (the codebook subset is "fully and partial and non coherent"), from 0 to 2 (the precoder type is "partial and non coherent"), or 0 (the precoder type is "non coherent").

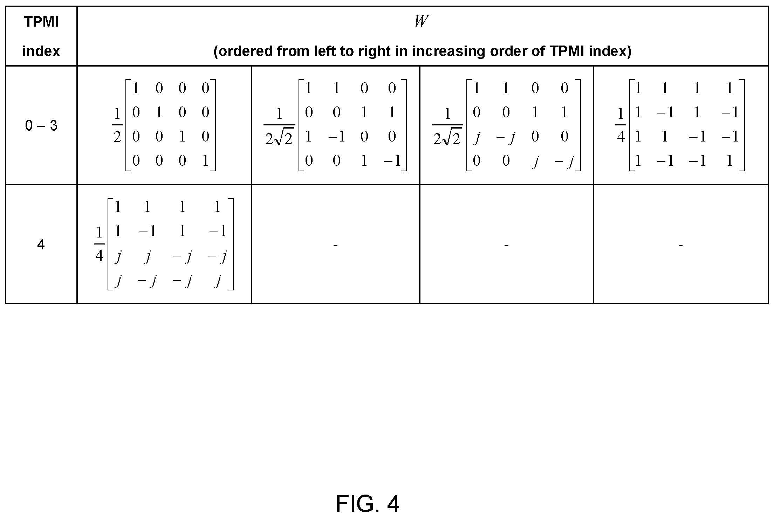

With reference to FIG. 4, the TPMIs notified to the UE for 4-layer transmission are from 0 to 4 (the codebook subset is "fully and partial and non coherent"), from 0 to 2 (the precoder type is "partial and non coherent"), or 0 (the precoder type is "non coherent").

Note that a precoding matrix in which only one element is other than 0 in each column may be referred to as a non coherent codebook. A precoding matrix in which a specific number of elements (the number is more than one but not all of the elements in the column) are other than 0 in each column may be referred to as a partial coherent codebook. A precoding matrix in which none of the elements is 0 in each column may be referred to as a full coherent codebook.

The non coherent codebook and the partial coherent codebook may be referred to as an antenna selection precoder (antenna selection precoder), an antenna port selection precoder, or the like. For example, the non coherent codebook (non coherent precoder) may be referred to as a 1-port selection precoder, a port selection precoder of one port, or the like. The partial coherent codebook (partial coherent precoder) may be referred to as an x-port (x is an integer greater than 1) selection precoder, a port selection precoder of x ports, or the like. The full coherent codebook may be referred to as a non-antenna selection precoder, an all-port precoder, or the like.

Note that, in the present disclosure, the partial coherent codebook may correspond to codebooks (i.e., codebooks of TPMI = 4 to 11, in a case of single-layer transmission with four antenna ports), which are obtained by removing codebooks corresponding to the TPMIs indicated for the UE configured with a codebook subset of "non coherent" (for example, the RRC parameter "codebookSubset" = "nonCoherent") from codebooks (precoding matrices) corresponding to the TPMIs indicated for the UE configured with a codebook subset of "partial coherent" (for example, the RRC parameter "codebookSubset" = "partialAndNonCoherent") by the DCI for codebook-based transmission.

Note that, in the present disclosure, the fully coherent codebook may correspond to codebooks (i.e., codebooks of TPMI = 12 to 27, in a case of single-layer transmission with four antenna ports), which are obtained by removing codebooks corresponding to the TPMIs indicated for the UE configured with a codebook subset of "partial coherent" (for example, the RRC parameter "codebookSubset" = "partialAndNonCoherent") from codebooks (precoding matrices) corresponding to the TPMIs indicated for the UE configured with a codebook subset of "fully coherent" (for example, the RRC parameter "codebookSubset" = "fullyAndPartialAndNonCoherent") by the DCI for codebook-based transmission.

### (Size of Precoding Information Field)

As described above, the UE may determine the TPMIs and the number of layers (transmitted rank) for the PUSCH, based on the precoding information field in the DCI (for example, DCI format 0_1/0_2) for scheduling the PUSCH.

Regarding the codebook-based PUSCH, the number of bits of the precoding information field may be determined (may vary) based on a configuration of enabled/disabled of the transform precoder for the PUSCH (for example, a higher layer parameter transformPrecoder), a configuration of the codebook subset for the PUSCH (for example, a higher layer parameter codebookSubset), a configuration of a maximum number of layers for the PUSCH (for example, a higher layer parameter maxRank), a configuration of uplink full power transmission for the PUSCH (for example, a higher layer parameter ul-FullPowerTransmission), the number of antenna ports for the PUSCH, and the like.

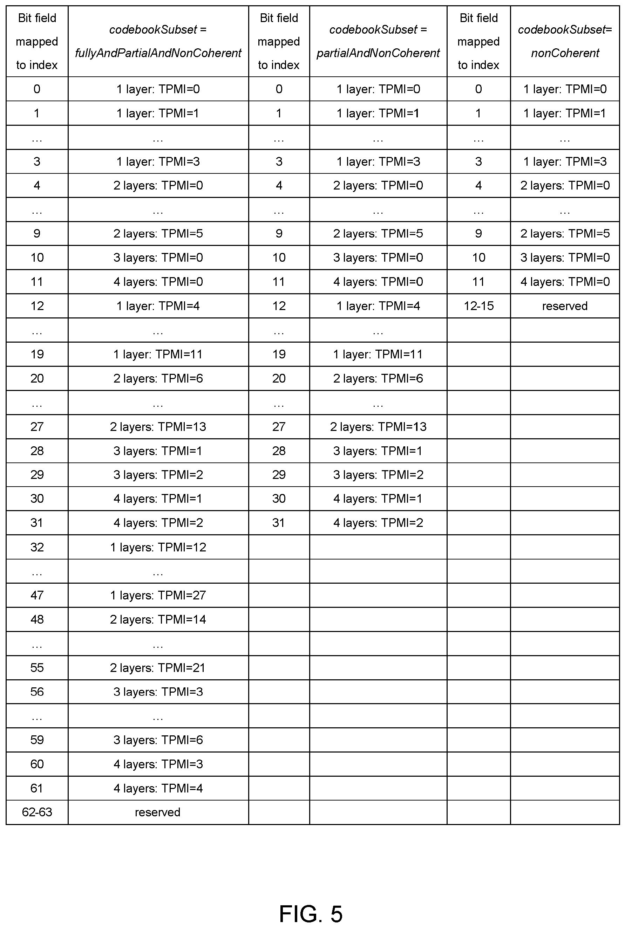

FIG. 5 is a diagram to show an example of correspondence between precoding information and number of layers field values and the number of layers and the TPMIs in Rel-16 NR. The correspondence of the present example is correspondence for four antenna ports in a case in which the transform precoder is configured to be disabled, a maximum rank (maxRank) is configured to 2, 3, or 4, and uplink full power transmission is not configured or full power mode 2 (fullpowerMode2) is configured or full power (fullpower) is configured; however, this is not restrictive. Note that a person skilled in the art can naturally understand that "bit field mapped to index" in the figure signifies the precoding information and number of layers field value (or field index/codepoint) .

In FIG. 5, the precoding information field is 6 bits when the codebook subset of "full coherent (fullyAndPartialAndNonCoherent)" is configured for the UE, 5 bits when the codebook subset of "partial coherent (partialAndNonCoherent)" is configured, and 4 bits when the codebook subset of "non coherent (nonCoherent)" is configured.

Note that, as shown in FIG. 5, the number of layers and the TPMI corresponding to a certain precoding information field value may be the same (common) regardless of the codebook subset configured for the UE. For example, in FIG. 5, the number of layers and the TPMI indicated by precoding information field value = 0 to 11 may be the same for the codebook subsets of "full coherent (fullyAndPartialAndNonCoherent)", "partial coherent (partialAndNonCoherent)", and "non coherent (nonCoherent)". In FIG. 5, the number of layers and the TPMI indicated by precoding information field value = 0 to 31 may be the same for the codebook subsets of "full coherent (fullyAndPartialAndNonCoherent)" and "partial coherent (partialAndNonCoherent)".

Note that the precoding information field may be 0 bits regarding the non-codebook-based PUSCH. The precoding information field may be 0 bits regarding the codebook-based PUSCH of one antenna port.

### (Transmission of More than Four Antenna Ports)

In Rel-15/16 NR, uplink (UL) Multi Input Multi Output (MIMO) transmission of up to four layers is supported. In future radio communication systems, in order to implement higher spectral efficiency, supporting UL transmission with the number of layers greater than four has been under study. For example, for Rel-18 NR, up to 6-rank transmission using six antenna ports, up to 6/8-rank transmission using eight antenna ports, and the like have been under study.

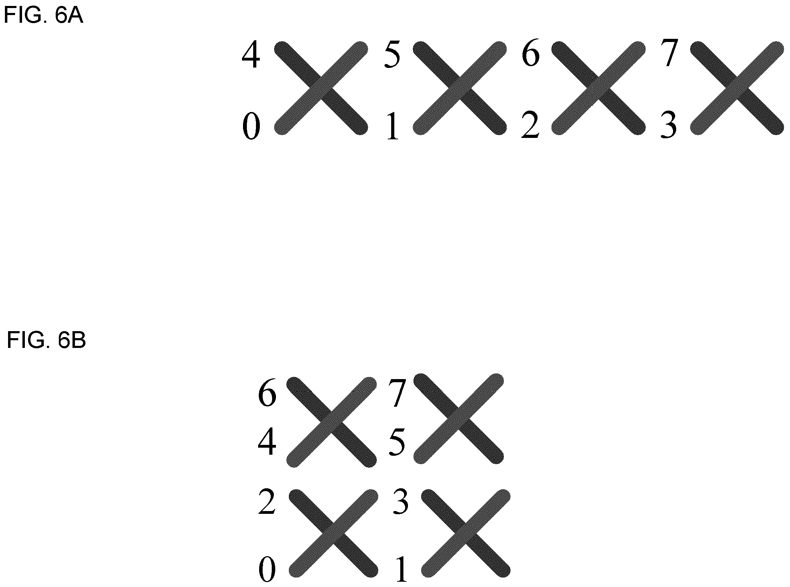

FIGS. 6A and 6B are diagrams to show examples of antenna layouts of eight antenna ports. FIG. 6A shows an example in which eight antennas are arrayed one-dimensionally (1 dimensional (1D)), and FIG. 6B shows an example in which eight antennas are arrayed two-dimensionally (2 dimensional (2D)). FIG. 6A corresponds to an antenna configuration having four cross-polarized antennas arrayed in the horizontal direction. FIG. 6B corresponds to an antenna configuration having two cross-polarized antennas arrayed in the horizontal direction and two cross-polarized antennas in the vertical direction.

Note that the antenna layouts are not limited to these. For example, the number of panels in which the antennas are arrayed, directions of the panels, coherency of each panel/antenna ("full coherent", "partial coherent", "non coherent", or the like), an antenna layout in a specific direction (horizontal, vertical, or the like), a polarized antenna configuration (single polarization, cross polarization, the number of polarization planes, or the like) may be different from those in the examples of FIGS. 6A and 6B.

In Rel-15/16 NR, transmission of one codeword (CW) on one PUSCH is supported, whereas for Rel-18 NR, it is under study that the UE transmits more than one CW on one PUSCH. For example, support of 2CW transmission for ranks 5 to 8, support of 2CW transmission for ranks 2 to 8, and the like are under study.

In the Rel-15 UE and the Rel-16 UE, it is assumed that only one beam/panel is used for UL transmission at a certain time, whereas in Rel. 17 or later versions, simultaneous UL transmission (for example, PUSCH transmission) of a plurality of beams/a plurality of panels to one or more TRPs for the sake of enhancement of UL throughput and reliability is under study. Note that simultaneous PUSCH transmission of a plurality of beams/a plurality of panels may correspond to PUSCH transmission with the number of layers being greater than four, or may correspond PUSCH transmission with the number of layers being equal to or less than four.

However, studies have not been carried out on how to determine UL transmission (for example, the precoding matrix/TPMI index/number of layers, or the like) regarding UL transmission using more than four antenna ports. For example, studies have not been carried out on how to configure/perform notification of the TPMI index/number of layers corresponding to each codebook subset for 1 to 8-layer transmission using eight antenna ports. Unless this is clarified, increase of communication throughput may be prevented.

In view of this, the inventors of the present invention came up with the idea of a method for appropriately performing UL transmission using more than four antenna ports.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C".

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted. Note that the configuration may be performed (or may be notified) based on RRC signaling, and the activation/deactivation may be performed (or may be notified) based on a MAC CE.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna, a layer, a transmission, a port, an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information", "one or a plurality of pieces of spatial relation information", and the like. The TCI state and the TCI may be interchangeably interpreted.

PUSCH transmission in the following embodiments may or may not presuppose use of a plurality of panels (may be applied regardless of panels).

The number "8" in the following embodiments may be interpreted as any number greater than 4 (for example, 6, 10, 12, 16, ...).

### (Radio Communication Method)

The UE may receive information related to the precoder type indicating the codebook subset and downlink control information (DCI) including a certain field indicating the precoding information and number of layers. A specific codebook subset may be configured out of a plurality of codebook subsets (for example), using the information related to the precoder type. The information related to the precoder type may be configured/notified from the base station to the UE, using a higher layer parameter (for example, codebookSubset).

The UE may determine the precoding matrix indicator (or the TPMI index) and the number of layers to be applied to UL transmission, based on the information related to the precoder type received from the base station and the certain field included in the DCI, and determine the precoding matrix (W) to be applied to UL transmission.

Regarding a plurality of codebook subsets, an association (table) between the codepoints (or the field indexes) of the certain field in the DCI and the TPMI indexes/number of layers may be defined in advance. The precoding matrix (W) may be determined based on an association (or the table) between the TPMI indexes and the precoding matrices for each layer.

When more than four antenna ports (or layers) are supported in UL transmission, the UE may apply a table corresponding to more than four antenna ports (for example, an association between the codepoints of the certain field in the DCI and the TPMI indexes/number of layers).

When more than four antenna ports (or layers) are supported in UL transmission, an association (for example, a precoding matrix table) between the TPMI indexes and the precoding matrices (W) may be defined for each layer. In this case, up to four antenna ports, the associations (for example, FIG. 1 to FIG. 4) between the TPMI indexes and the precoding matrices (W) of existing systems (for example, Rel. 16 or previous versions) may be applied. Regarding each layer with more than four antenna ports (for example, eight antenna ports), new associations between the TPMI indexes and the precoding matrices (W) may be defined/configured.

For example, regarding i-layer (for example, i = 1, 2, ..., 8) transmission for the UL with 8Tx/antenna ports, the precoding matrices (or TPMI matrices) and the TPMI indexes (or precoding matrix tables) may be introduced/supported for each i layer.

In this case, in the non coherent precoder (for example, the port selection precoder of one port (1-port port selection precoder), when the precoder number of i layers is X_{NC,i}, the TPMI indexes corresponding to "non coherent" may be 0 to X_{NC,i} - 1.

In the partial coherent precoder (for example, the port selection precoder of x ports (x-port port selection precoder (x = 2/4/6)), when the precoder number of i layers is X_{PC,i}, the TPMI indexes corresponding to "partial coherent" may be X_{NC,i} to (X_{NC,i} + X_{PC,i} - 1) .

In the full coherent precoder, when the precoder number of i layers is X_{FC,i}, the TPMI indexes corresponding to "full coherent" may be (X_{NC,i} + X_{PC,i}) to (X_{NC,i} + X_{PC,i} + X_{FC,i} - 1 - 1) .

### <First Embodiment>

A first embodiment will describe an association (for example, a "precoding information and number of layers table") between the codepoints of the certain field in the DCI and the number of layers/TPMI indexes for a plurality of codebook subsets when more than four antenna ports/layers are supported in UL transmission.

The present disclosure will provide description by taking an example of eight antenna ports/eight layers as more than four antenna ports/layers, but an applicable number of antenna ports/number of layers is not limited to this. The present disclosure will provide description by taking an example of a field indicating the precoding information and the number of layers (for example, "Precoding information and number of layers") as the certain field in the DCI, but this is not restrictive.

In the present disclosure, an association between the codepoints (or the bit fields mapped to the indexes (for example, "bit field mapped to index") of the certain field in the DCI) and the number of layers/TPMI indexes may be interpreted as a table. The present disclosure will provide description by taking an example of a case in which "fully and partial and non coherent (fullyAndPartialAndNonCoherent)", "partial and non coherent (partialAndNonCoherent)", "non coherent (nonCoherent)", and all (or at least two) are included as a plurality of codebook subsets (or a plurality of precoder types), but this is not restrictive.

When eight antenna ports/layers are supported in the UL, correspondence between at least a part of the codepoints (or the bit fields/field indexes mapped to the indexes) of the certain field in the DCI and the number of layers/TPMI indexes may be configured in common to the plurality of codebook subsets. In other words, in at least a part of the codepoints of the certain field in the DCI, the same number of layers/TPMI indexes may correspond between the plurality of codebook subsets.

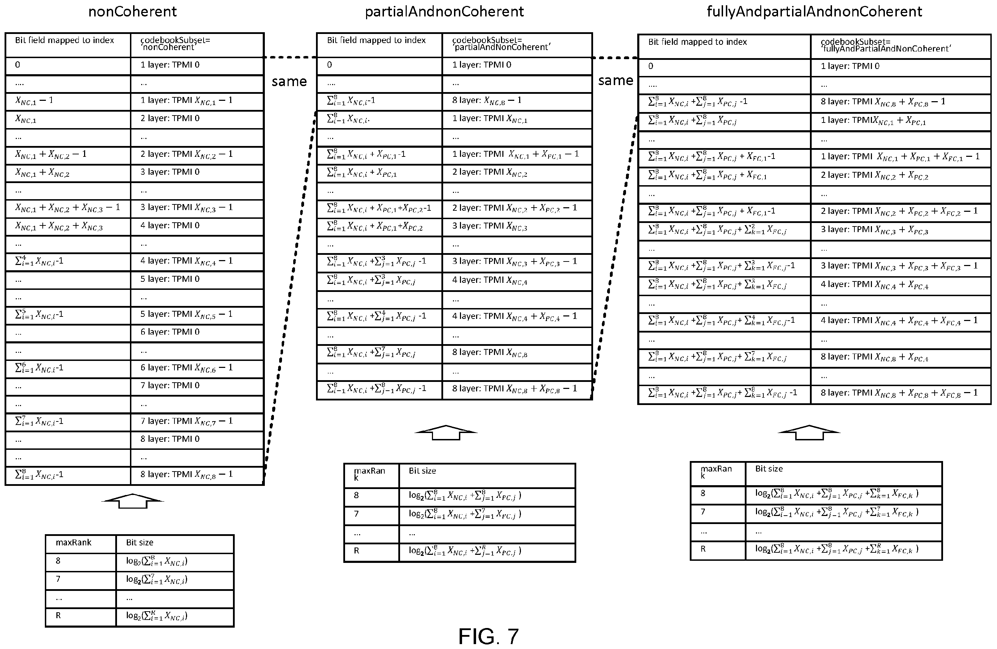

FIG. 7 is a diagram to show an example of an association (or a table) between the codepoints of the certain field (for example, the precoding information and number of layers field) in the DCI and the number of layers/TPMI indexes.

FIG. 7 shows a case in which eight antenna ports are used, the transform precoder is disabled, and the maximum rank (for example, maxRank) is 2, 3, 4, 5, 6, 7, or 8. FIG. 7 may be applied to a case in which full power transmission (for example, ul-FullPowerTransmission) is not configured, or full power mode 2 (for example, fullpowerMode2) is configured, or full power (for example, fullpower) is configured.

The bit size of the certain field in the DCI may be defined to be different for every plurality of codebook subsets. In each codebook subset, each bit size may be defined/configured to be different, based on the maximum rank (for example, maxRank).

FIG. 7 shows a case in which the number (or the bit size) of codepoints corresponding to the number of layers/TPMI indexes when the codebook subset is "non coherent (nonCoherent)" is smaller than that of other codebook subsets (for example, partialAndNonCoherent/fullyAndPartialAndNonCoherent). The figure shows a case in which the number (or the bit size) of codepoints corresponding to the number of layers/TPMI indexes when the codebook subset is "partial and non coherent (partialAndNonCoherent)" is smaller than that of other codebook subsets (for example, fullyAndPartialAndNonCoherent).

When the codebook subset is "non coherent (nonCoherent)", one or more TPMI indexes are defined for each layer. For example, X_{NC,i} TPMI indexes may be associated with/configured for i layers. X_{NC,i} may be the precoder number of "non coherent" corresponding to i layers.

When the codebook subset is "partial and non coherent (partialAndNonCoherent)", the TPMI indexes corresponding to "partial coherent" are defined in addition to the TPMI indexes corresponding to "non coherent" for each layer. For example, X_{PC,i} TPMI indexes may be associated with/configured for i layers in addition to the X_{NC,i} TPMI indexes. X_{PC,i} may be the precoder number of "partial coherent" corresponding to i layers.

When the codebook subset is "fully and partial and non coherent (fullyAndPartialAndNonCoherent)", the TPMIs corresponding to "full coherent" are defined in addition to the TPMI indexes corresponding to "non coherent" and the TPMI indexes corresponding to "partial coherent" for each layer. For example, X_{FC,i} TPMI indexes may be associated with/configured for i layers in addition to the X_{NC,i} and X_{PC,i} TPMI indexes. X_{FC,i} may be the precoder number of "full coherent" corresponding to i layers.

The number of supported TPMI indexes (or precoder number) may be separately configured for each number of layers. For example, the number of supported TPMI indexes (or precoder number) may be configured to be smaller as the number of layers is greater. In this case, the number of supported TPMI indexes may be the same in a part of the number of layers.

In this manner, the codepoints corresponding to the number of layers/TPMI indexes when the codebook subset is "non coherent (nonCoherent)" may be applied (or configured to be the same) also when the codebook subset is "partial and non coherent (partialAndNonCoherent)". The codepoints corresponding to the number of layers/TPMI indexes when the codebook subset is "partial and non coherent (partialAndNonCoherent)" may be applied (or configured to be the same) also when the codebook subset is "fully and partial and non coherent (fullyAndPartialAndNonCoherent)".

In this manner, when eight antenna ports/layers are supported in the UL, the correspondence between at least a part of the codepoints of the certain field in the DCI and the number of layers/TPMI indexes is configured in common to the plurality of codebook subsets. Consequently, increase of overhead of the certain field in the DCI can be prevented.

The number of layers and the TPMI indexes are indicated to the UE by each codepoint (or field index) of the certain field in the DCI. The UE may determine the number of layers/TPMI index (or the precoding matrix) to be used for UL transmission, based on the value of the codepoint of the certain field in the DCI. The base station may indicate the number of layers/TPMI index (or the precoding matrix) to be used for UL transmission to the UE, using the codepoint of the certain field in the DCI.

The table shown in FIG. 7 may be applied to a specific case. For example, the table of FIG. 7 may be applied when eight antenna ports/Tx/layers are configured for UL transmission (for example, the PUSCH/SRS) by RRC/MAC CE/DCI. Otherwise, tables for two/four antenna ports (for example, the tables defined in Rel. 16 or previous versions) may be applied.

FIG. 7 shows a case in which combinations of the number of layers and the TPMI indexes are associated with the codepoints (or the field indexes) of the certain field in the DCI, but this is not restrictive. The number of layers and the TPMI indexes may be separately associated (or separately indicated to the UE).

The number of supported TPMIs (or precoder numbers) X_{NC,i}, X_{PC,i}, and X_{FC,i} in each layer (for example, i layers) for eight antenna ports may be configured by RRC/MAC CE. In this case, the bit size of the certain field (for example, the precoding information and number of layers field) in the DCI may be configured to be the same as other antenna ports (for example, four antenna ports).

Alternatively, the bit size of the certain field in the DCI corresponding to eight antenna ports and the bit size of the certain field in the DCI corresponding to other antenna ports (for example, four antenna ports) may be separately (for example, differently) configured.

Note that FIG. 7 shows a table of a case in which the maximum rank is 2, 3, 4, 5, 6, 7, or 8 for eight antenna ports, but this is not restrictive. A table of a case in which the maximum rank is less than 8 (for example, 2, 3, 4, 5, 6, or 7) for eight antenna ports may be separately defined/configured. In this case, a table configuration in which the codebook subset corresponds to two or three may be employed.

### <Second Embodiment>

A second embodiment will describe a certain field (for example, the precoding information and number of layers field) in DCI when more than four antenna ports/layers are supported in UL transmission.

When more than four antenna ports/layers are supported in UL transmission, a table to be used for determination of the number of layers/TPMI indexes may be dynamically indicated to the UE, using a field in DCI. For example, when eight antenna ports/Tx/layers for UL transmission (for example, the PUSCH/SRS) are configured by RRC/MAC CE/DCI, which is to be used between a table for more than four antenna ports (for example, a table for 8Tx) or a table for four or less antenna ports (for example, a table for 2Tx/4Tx) may be dynamically indicated by DCI.

A UE capability related to whether or not to support a dynamic indication of 8Tx or 2Tx/4Tx may be introduced/defined.

An indication (or table switching) of a table to be used for determination of the number of layers/TPMI indexes may be performed using a new field or an existing field in DCI. For example, one of the table for 8Tx and the table for 2Tx/4Tx may be indicated using a new field (for example, 1 bit) in DCI. Note that an indication may be performed using 1 bit of an existing field, instead of providing a new field in DCI.

When 8Tx (for example, the table for 8Tx) is indicated by the DCI, the table for 8Tx (for example, FIG. 7) is applied to an indication of the precoding information and the number of layers. In this case, the UE determines the number of layers and the precoding information (or the precoding matrix (W)) to be applied to UL transmission, based on the codepoints of the certain field and the table for 8Tx (for example, FIG. 7) .

In contrast, when 4Tx (for example, the table for 4Tx) is indicated by the DCI, the table for 4Tx is applied to an indication of the precoding information and the number of layers. In this case, the UE determines the number of layers and the precoding information (or the precoding matrix (W)) to be applied to UL transmission, based on the codepoints of the certain field and the table for 4Tx.

The UE may control interpretation of the certain field (for example, the precoding information and number of layers field) in the DCI, depending on the table to be used (or the size of each table).

A case is assumed in which 8Tx (for example, the table for eight antenna ports/Tx) and 4Tx (for example, the table for four antenna ports/Tx) have the same size. For example, this corresponds to a case in which the number of combinations with the number of layers/TPMI indexes (corresponding to "full/partial/non coherent") in the table corresponding to four or less antenna ports and the number of combinations with the number of layers/TPMI indexes (corresponding to "full/partial/non coherent") in the table corresponding to more than four antenna ports are the same.

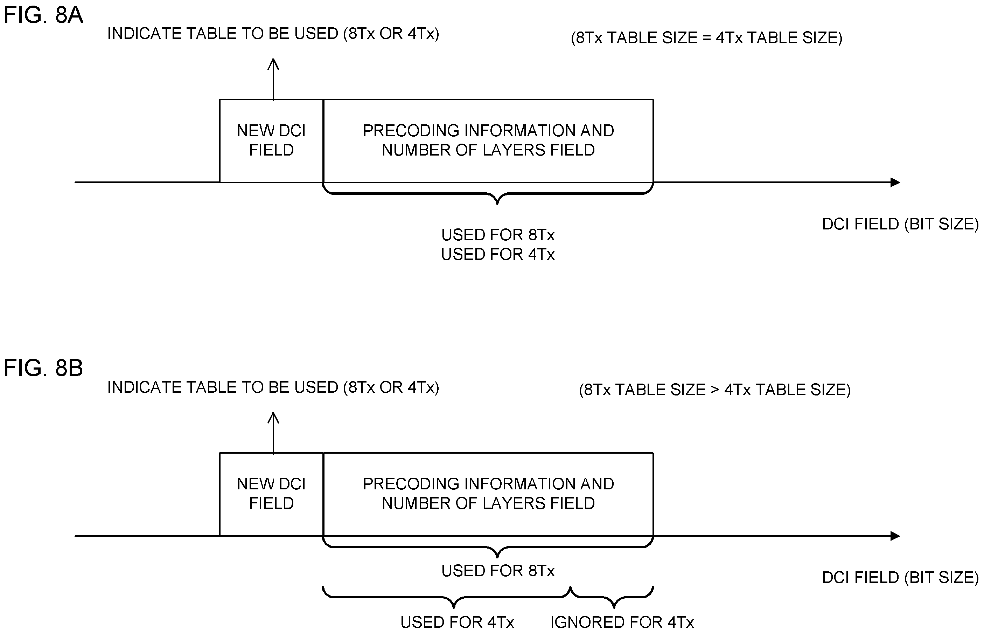

In this case, regarding each Tx, the size of the certain field in the DCI may be configured to be the same. The base station may indicate the precoding information and the number of layers of the table for 8Tx or the precoding information and the number of layers of the table for 4Tx, using all of the bits of the certain field in the DCI (see FIG. 8A). The UE may determine the number of layers/TPMI indexes by taking all of the bits (or the codepoints) of the certain field in the DCI into consideration, regardless of the table to be applied to (for example, which table corresponding to which number of antenna ports is indicated).

A case is assumed in which 8Tx (for example, the table for eight antenna ports/Tx) and 4Tx (for example, the table for four antenna ports/Tx) have different sizes. For example, this corresponds to a case in which the number of combinations with the number of layers/TPMI indexes (corresponding to "full/partial/non coherent") in the table corresponding to four or less antenna ports and the number of combinations with the number of layers/TPMI indexes (corresponding to "full/partial/non coherent") in the table corresponding to more than four antenna ports are different.

In this case, regarding the size of the certain field in the DCI, a maximum size may be determined out of {table size for 8Tx, table size for 4Tx}. Regarding the smaller size out of {table size for 8Tx, table size for 4Tx}, a part of the certain field (for example, an LSB or an MSB) may be used, and the rest part of the field may be unused or ignored (see FIG. 8B).

FIG. 8B shows a case in which the table size for 8Tx (or the size of the certain field in the DCI corresponding to 8Tx) is larger than the table size for 4Tx (or the size of the certain field in the DCI corresponding to 4Tx). In this case, the size of the certain field in the DCI may be determined based on the larger table size (here, the table size for 8Tx). When the table for 8Tx is indicated, the UE may determine the number of layers/TPMI indexes, using all of the bits of the certain field. In contrast, when the table for 4Tx is indicated, the UE may determine the number of layers/TPMI indexes using a part of the bits of the certain field, and ignore the rest of the bits.

Consequently, even when the table size corresponding to each number of antenna ports is different and the table to be used is dynamically indicated using DCI, the number of layers/TPMI indexes corresponding to each number of antenna ports can be indicated using a common certain field.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

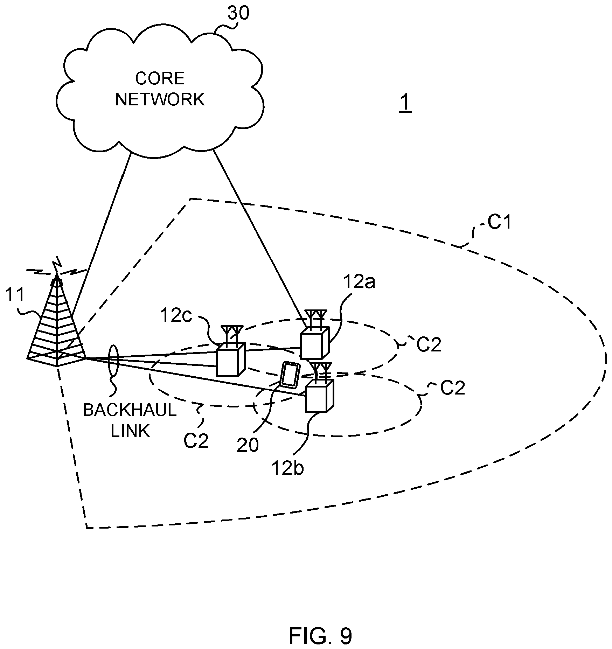

FIG. 9 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, and 5G.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

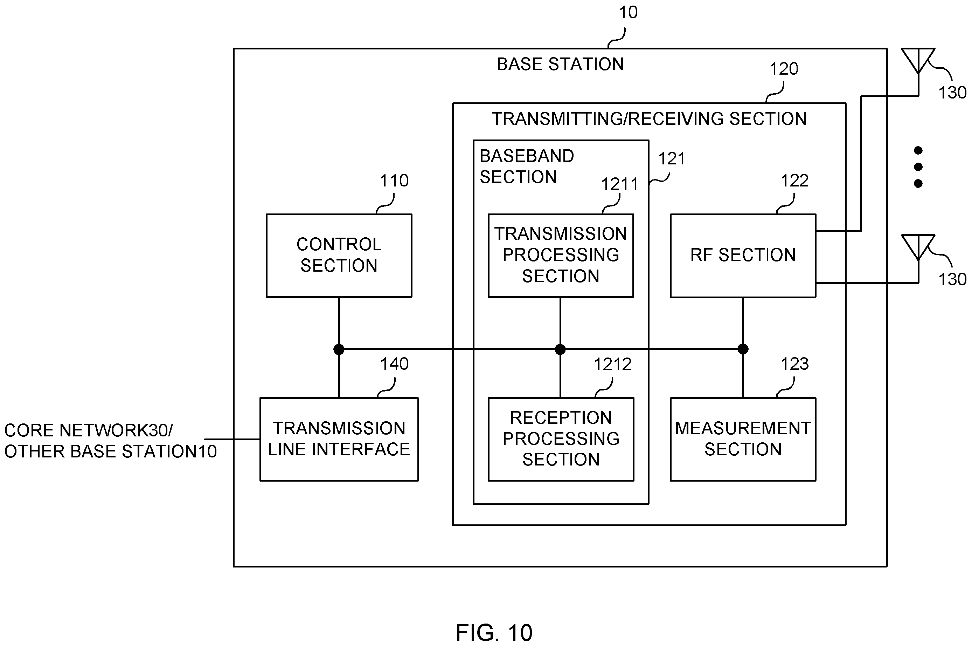

FIG. 10 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit information related to a precoder type indicating a codebook subset and downlink control information including a field indicating precoding information and a number of layers.

The control section 110 may indicate a transmitted precoding matrix indicator and the number of layers to be applied to UL transmission, using the information related to the precoder type and the field in the downlink control information. When more than four antenna ports are supported in the UL transmission, correspondence between codepoints of the field and the transmitted precoding matrix indicator and the number of layers may be defined/configured in common to a plurality of codebook subsets.

### (User Terminal)

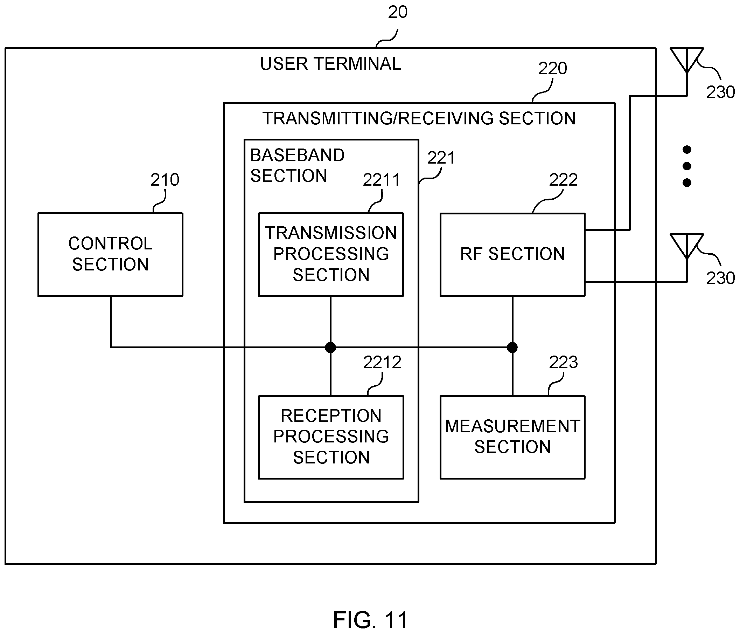

FIG. 11 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive information related to a precoder type indicating a codebook subset and downlink control information including a field indicating precoding information and a number of layers.

The control section 210 may determine a transmitted precoding matrix indicator and the number of layers to be applied to UL transmission, based on the information related to the precoder type and the field in the downlink control information. When more than four antenna ports are supported in the UL transmission, correspondence between codepoints of the field and the transmitted precoding matrix indicator and the number of layers may be defined/configured in common to a plurality of codebook subsets.

The control section 210 may determine which is to be applied between a first association (for example, a 2Tx/4Tx table) between the codepoints of the field and the transmitted precoding matrix indicator and the number of layers corresponding to four or less antenna ports and a second association (for example, 8Tx) between the codepoints of the field and the transmitted precoding matrix indicator and the number of layers corresponding to the more than four antenna ports, based on a configuration of a certain higher layer parameter related to antenna ports.

The control section 210 may determine which is to be applied between a first association (for example, a 2Tx/4Tx table) between the codepoints of the field and the transmitted precoding matrix indicator and the number of layers corresponding to four or less antenna ports and a second association (for example, 8Tx) between the codepoints of the field and the transmitted precoding matrix indicator and the number of layers corresponding to the more than four antenna ports, based on a certain field included in the downlink control information.

When a size of the second association is larger than the size of the first association and the first association is to be applied, the control section 210 may determine the transmitted precoding matrix indicator and the number of layers to be applied to the UL transmission based on a part of the codepoints of the field, and ignore other codepoints of the field.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

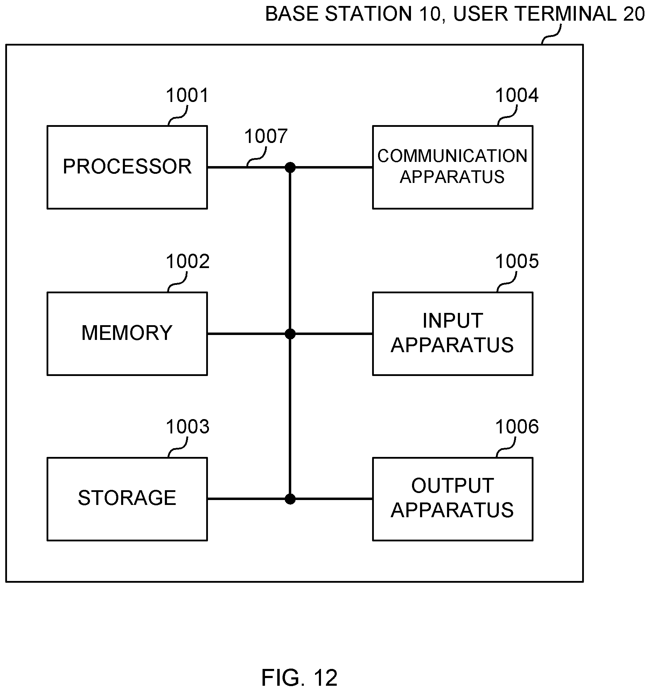

For example, a base station, a user terminal, and so on according to one embodiment of the present disclosure may function as a computer that executes the processes of the radio communication method of the present disclosure. FIG. 12 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmission power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

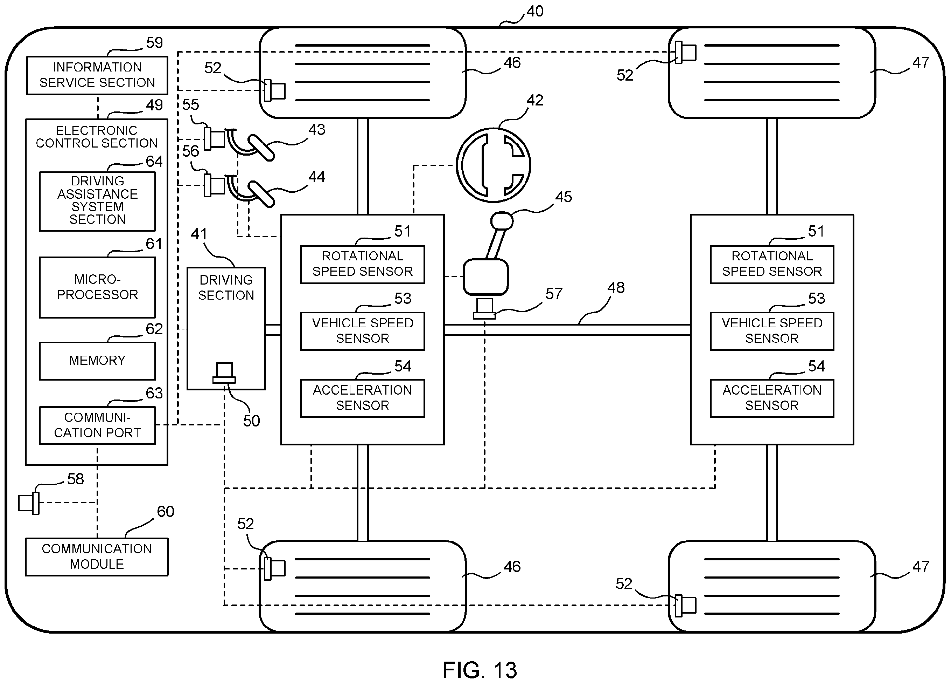

FIG. 13 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives information related to a precoder type indicating a codebook subset and downlink control information including a field indicating precoding information and a number of layers; and
a control section that determines a transmitted precoding matrix indicator and the number of layers to be applied to UL transmission, based on the information related to the precoder type and the field in the downlink control information, wherein
when more than four antenna ports are supported in the UL transmission, correspondence between codepoints of the field and the transmitted precoding matrix indicator and the number of layers is defined in common to a plurality of codebook subsets.

2. The terminal according to claim 1, wherein
the control section determines which is to be applied between a first association between the codepoints of the field and the transmitted precoding matrix indicator and the number of layers corresponding to four or less antenna ports and a second association between the codepoints of the field and the transmitted precoding matrix indicator and the number of layers corresponding to the more than four antenna ports, based on a configuration of a certain higher layer parameter related to antenna ports.

3. The terminal according to claim 1, wherein
the control section determines which is to be applied between a first association between the codepoints of the field and the transmitted precoding matrix indicator and the number of layers corresponding to four or less antenna ports and a second association between the codepoints of the field and the transmitted precoding matrix indicator and the number of layers corresponding to the more than four antenna ports, based on a certain field included in the downlink control information.

4. The terminal according to claim 3, wherein
when a size of the second association is larger than the size of the first association and the first association is to be applied, the control section determines the transmitted precoding matrix indicator and the number of layers to be applied to the UL transmission based on a part of the codepoints of the field, and ignores other codepoints of the field.

5. A radio communication method for a terminal, the radio communication method comprising:
receiving information related to a precoder type indicating a codebook subset and downlink control information including a field indicating precoding information and a number of layers; and
determining a transmitted precoding matrix indicator and the number of layers to be applied to UL transmission, based on the information related to the precoder type and the field in the downlink control information, wherein
when more than four antenna ports are supported in the UL transmission, correspondence between codepoints of the field and the transmitted precoding matrix indicator and the number of layers is defined in common to a plurality of codebook subsets.

6. A base station comprising:
a transmitting section that transmits information related to a precoder type indicating a codebook subset and downlink control information including a field indicating precoding information and a number of layers; and
a control section that indicates a transmitted precoding matrix indicator and the number of layers to be applied to UL transmission, using the information related to the precoder type and the field in the downlink control information, wherein
when more than four antenna ports are supported in the UL transmission, correspondence between codepoints of the field and the transmitted precoding matrix indicator and the number of layers is defined in common to a plurality of codebook subsets.
